# EUROPEAN PATENT APPLICATION

(11) **EP 4 343 983 A1**
(43) Date of publication of application: **27.03.2024**
(21) Application number: 23199016.9
(22) Date of filing: 22.09.2023
(51) Int. Cl.: H01R 13/66, B60L 53/16, H01R 24/28, H01R 29/00

(54) **ELECTRIC VEHICLE SUPPLY EQUIPMENT AND POWER CORD**

(30) Priority: 23.09.2022 US 202263409279 P; 18.09.2023 US 202318369501
(71) Applicant: Aptiv Technologies (2) S.à r.l., 1882 Luxembourg (LU)
(72) Inventor: PLANT, Mark A., Boardman, OH, 44512 (US); LIPINSKY, Wyatt, Youngstown, OH, 44511 (US)
(74) Representative: Bardehle Pagenberg Partnerschaft mbB Patentanwälte Rechtsanwälte

(57) **Abstract**

The electric vehicle supply equipment described herein includes one or more power cords (100) this is/are configured to be disconnected from and reconnected to the electrical vehicle supply equipment. The electric vehicle supply equipment also includes a printed circuit board assembly (102) disposed within an electrical plug (104) of the power cord (100) having an electronic controller configured to transmit data regarding a connector blade configuration of the plug (104) and a printed circuit board assembly housing (104) enclosing the printed circuit board assembly (102). The printed circuit board assembly housing (104) is disposed within a plug housing (128) of the electrical plug (104).

## Description

The invention generally relates to electric vehicle supply equipment, particularly electric vehicle supply equipment having an interchangeable power cord.

Power cords for Electric Vehicle Supply Equipment (EVSE) are typically permanently attached to the EVSE. This then requires a different EVSE to be used with different alternating current (AC) power receptacles, e.g., National Electrical Manufactures Association (NEMA) 5-15 receptacles for 120 volt AC power versus NEMA 14-50 receptacles for 220 volt AC power. This is partly driven by the requirement for the power cord to be compatible with the voltage and current requirements of the EVSE. There may also be a need to monitor the temperature of the connector blades in the plug of the power cord in order to control the EVSE to avoid overtemperature conditions in the plug by reducing or discontinuing the power draw through the power cord when the temperature of the connector blades exceed a preset threshold. The monitoring of the connector blade temperature is typically performed using a dedicated temperature sensor, e.g., thermistor, located near each of the connector blades. Each of these temperature sensors usually require two dedicated wires in the power cord to communicate the connector blade temperatures to the EVSE, thereby increasing the size and decreasing the flexibility of the power cord. An EVSE/power cord combination that can avoid these issues remains desired.

According to one or more aspects of the present disclosure, electric vehicle supply equipment includes one or more power cords configured to be disconnected from and reconnected to the electrical vehicle supply equipment; a printed circuit board assembly disposed within a plug of the power cord having an electronic controller configured to transmit data regarding a connector blade configuration of the plug; and a printed circuit board assembly housing enclosing the printed circuit board assembly. The printed circuit board assembly housing is disposed within a plug housing of the plug.

In some aspects of the electrical vehicle supply equipment described in the previous paragraph, the printed circuit board assembly further includes an electronic temperature sensor in communication with the electronic controller and located proximate to a connector blade of the plug. The electronic controller is configured to output temperature data of the connector blade based on a signal provided by the electronic temperature sensor.

In some aspects of the electrical vehicle supply equipment described in any one of the previous paragraphs, the electronic controller is configured to transmit temperature data of the connector blade to the electric vehicle supply equipment via a two wire interface.

In some aspects of the electrical vehicle supply equipment described in any one of the previous paragraphs, the printed circuit board assembly housing is configured to locate the electronic temperature sensor relative to the connector blade within the plug housing within a predetermined dimensional tolerance.

In some aspects of the electrical vehicle supply equipment described in any one of the previous paragraphs, the printed circuit board assembly housing defines locating features that engage corresponding locating features in the plug housing to locate the electronic temperature sensor relative to the connector blade within the plug housing within a predetermined dimensional tolerance.

In some aspects of the electrical vehicle supply equipment described in any one of the previous paragraphs, the printed circuit board assembly housing includes a case portion in which the printed circuit board assembly is disposed, and a cover portion configured to enclose the printed circuit board assembly within the printed circuit board assembly housing.

In some aspects of the electrical vehicle supply equipment described in any one of the previous paragraphs, the case portion is connected to the cover portion by a living hinge.

In some aspects of the electrical vehicle supply equipment described in any one of the previous paragraphs, the printed circuit board assembly housing is configured to provide electrostatic discharge protection for the printed circuit board assembly.

In some aspects of the electrical vehicle supply equipment described in any one of the previous paragraphs, the printed circuit board assembly housing is configured to provide protection for the printed circuit board assembly against physical damage prior to installation of the printed circuit board assembly in the plug housing.

In some aspects of the electrical vehicle supply equipment described in any one of the previous paragraphs, the electronic controller is configured to transmit the data regarding the connector blade configuration of the plug of the power cord to the electric vehicle supply equipment via a two wire interface.

In some aspects of the electrical vehicle supply equipment described in any one of the previous paragraphs, the connector blade configuration of the plug is selected from a list consisting of National Electrical Manufactures Association 5-15P, 6-15P, 6-30P, and 6-50P, Europlug CCE 7/16, British Standard (BS) 1363, Australian/New Zealand Standard AS/NZS 3112, and Chinese PPCS-CCC technical standards.

According to one or more aspects of the present disclosure, a power cord configured for use with electric vehicle supply equipment includes a printed circuit board assembly having an electronic controller configured to transmit data regarding a connector blade configuration of a plug of the power cord; and a printed circuit board assembly housing enclosing the printed circuit board assembly. The printed circuit board assembly housing is disposed within a plug housing of the plug.

In some aspects of the power cord described in the previous paragraph, the power cord further includes an electronic temperature sensor in communication with the electronic controller and located proximate to a connector blade of the plug. The electronic controller is configured to output temperature data of the connector blade based on a signal provided by the electronic temperature sensor.

In some aspects of the power cord described in any one of the previous paragraphs, the printed circuit board assembly housing defines locating features that engage corresponding locating features in the plug housing to locate the electronic temperature sensor relative to the connector blade within the plug housing within a predetermined dimensional tolerance.

In some aspects of the power cord described in any one of the previous paragraphs, the printed circuit board assembly housing includes a case portion in which the printed circuit board assembly is disposed, and a cover portion configured to enclose the printed circuit board assembly within the printed circuit board assembly housing.

In some aspects of the power cord described in any one of the previous paragraphs, the printed circuit board assembly housing is configured to provide electrostatic discharge protection and protection for the printed circuit board assembly against physical damage prior to installation of the printed circuit board assembly in the plug housing for the printed circuit board assembly.

In some aspects of the power cord described in any one of the previous paragraphs, the connector blade configuration of the plug is selected from a list consisting of National Electrical Manufactures Association 5-15P, 6-15P, 6-30P, and 6-50P, Europlug CCE 7/16, British Standard (BS) 1363, Australian/New Zealand Standard AS/NZS 3112, and Chinese PPCS-CCC technical standards.

According to one or more aspects of the present disclosure, a method of assembling a power cord includes disposing a printed circuit board assembly having an electronic controller configured to transmit data regarding a connector blade configuration of a plug of the power cord and an electronic temperature sensor in communication with the electronic controller within a printed circuit board assembly housing; disposing the printed circuit board assembly housing within a plug housing of the plug; and positioning the electronic temperature sensor relative to the connector blade within the plug housing within a predetermined dimensional tolerance by engaging locating features in the printed circuit board assembly housing with corresponding locating features in the plug housing.

In some aspects of the method described in the previous paragraph, the method further includes disposing the printed circuit board assembly within a case portion of the printed circuit board assembly housing; and enclosing the printed circuit board assembly within the printed circuit board assembly housing using a cover portion of the printed circuit board assembly housing joined to the case portion by a living hinge.

In some aspects of the method described in any one of the previous paragraphs, the connector blade configuration of the plug is selected from a list consisting of National Electrical Manufactures Association 5-15P, 6-15P, 6-30P, and 6-50P, Europlug CCE 7/16, British Standard (BS) 1363, Australian/New Zealand Standard AS/NZS 3112, and Chinese PPCS-CCC technical standards.

The present invention will now be described, by way of example with reference to the accompanying drawings, in which:
FIG. 1 shows a transparent isometric view of a power cord for electric vehicle supply equipment according to some embodiments;
FIG. 2 shows a close-up cut-away isometric view of a printed circuit board assembly in the power cord of FIG. 1 according to some embodiments;
FIG. 3 shows a cut-away isometric view of another power cord for electric vehicle supply equipment according to some embodiments;
FIG. 4 shows a close-up transparent isometric view of another printed circuit board assembly in the power cord of FIG. 3 according to some embodiments;
FIG. 5A shows an isometric view of printed circuit board assembly of FIG. 4 with a case in an open condition according to some embodiments;
FIG. 5B shows an isometric view of the printed circuit board assembly of FIG. 5A with the case in a closed condition according to some embodiments;
FIG. 6A shows an end view of the printed circuit board assembly of FIG. 5A according to some embodiments;
FIG. 6B shows a front view of the printed circuit board assembly of FIG. 5A according to some embodiments.

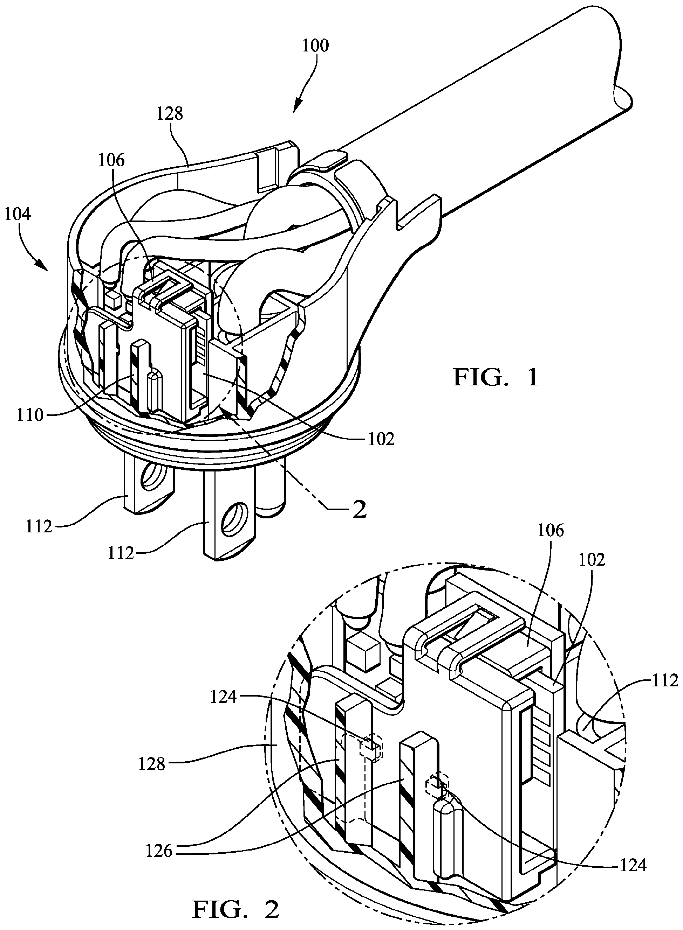

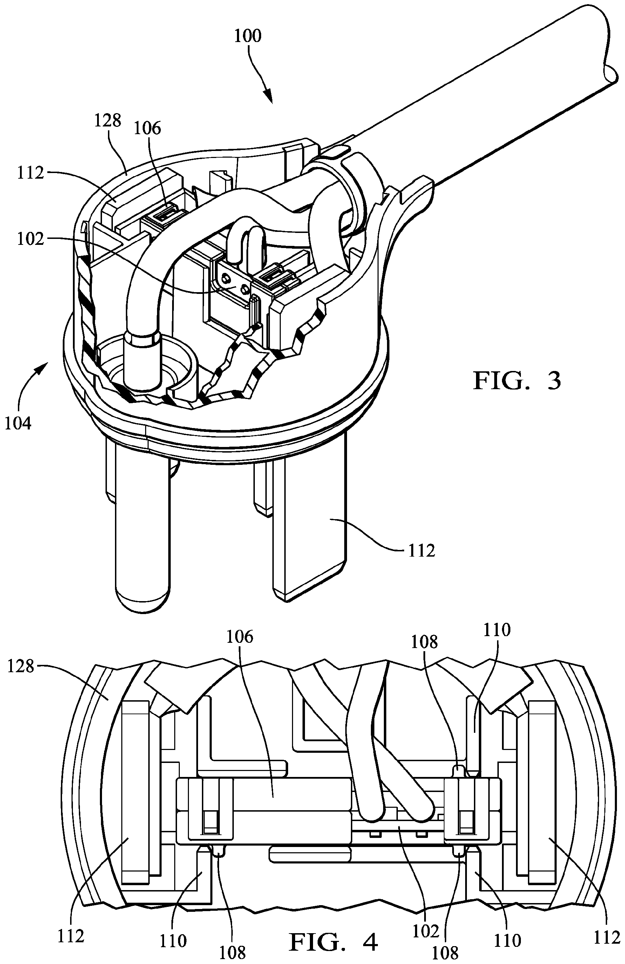

The power cords 100 illustrated in FIGs.1, 2, and 3 include a printed circuit board assembly, hereafter referred to as PCBA 102, which includes a microcontroller and other electronic devices, such as thermistors, which are configured to measure the temperature of the connector blades in the plug and digitally transmit the temperature information over a two wire connection to electrical vehicle supply equipment, hereafter referred to as EVSE, which is configured to provide electrical power from an electrical power supply, such as the electrical grid, to an electric vehicle's battery charging system. The microcontroller is also configured to digitally transmit plug configuration information to the EVSE to identify the type of electrical plug 104 at the end of the power cord 100, e.g., NEMA 5-15 as shown in FIGs 1 and 2 or NEMA 14-50 as shown in FIG. 3, so that the EVSE is properly configured for the voltage/current limits of the power cord 100.

Mounting or assembling the PCBA 102 within the electrical plug 104 can pose a risk for damage to components and functionality of the PCBA 102 due to electrostatic discharge (ESD) or other physical damage while manipulating and/or handling the PCBA 102 during the process of assembling the electrical plug 104. Therefore, the PCBA 102 is inserted within a protective PCBA housing 106 that provides physical and ESD protection for the PCBA 102. The PCBA housing 106 also includes locating features 108 in the form of grooves that engage with corresponding features 110 in the form of ribs in the plug body shown in FIG. 4 to positively locate the thermistors in relation to the connector blades 112 of the electrical plug 104. While the particular example of the location features includes grooves in the PCBA housing and ribs in the plug body, other embodiments may be envisioned in which the ribs are defined by the PCBA housing, and the corresponding grooves are defined by the plug housing.

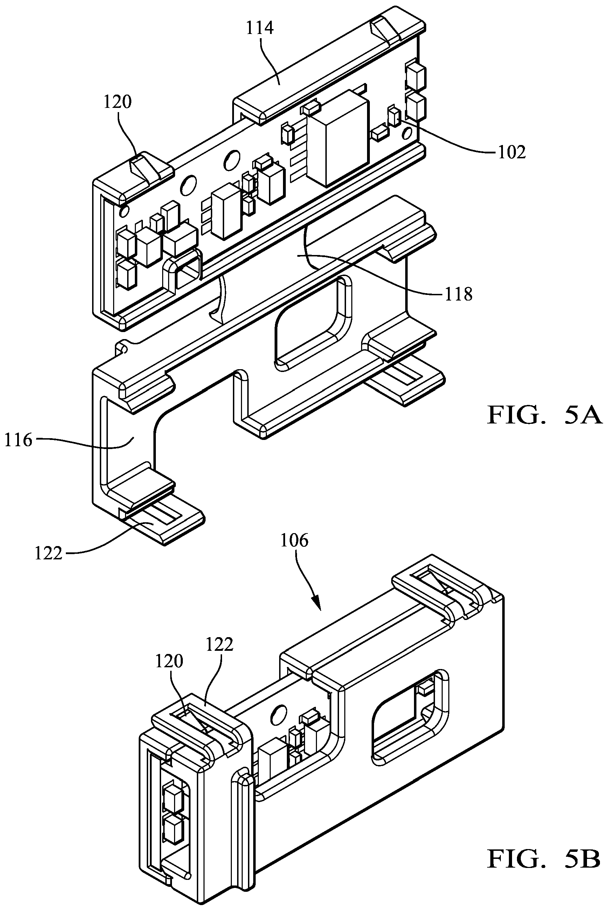

The PCBA housing 106 has a case portion 114 in which the PCBA 102 is received and a cover portion 116 connected to the case portion 114 by a living hinge 118 that encloses the PCBA 102 within the PCBA housing 106 when locking features 120 on the case portion 114 engage and latch to corresponding locking features 122 on the cover portion 116 as shown in FIGs. 5A and 5B.

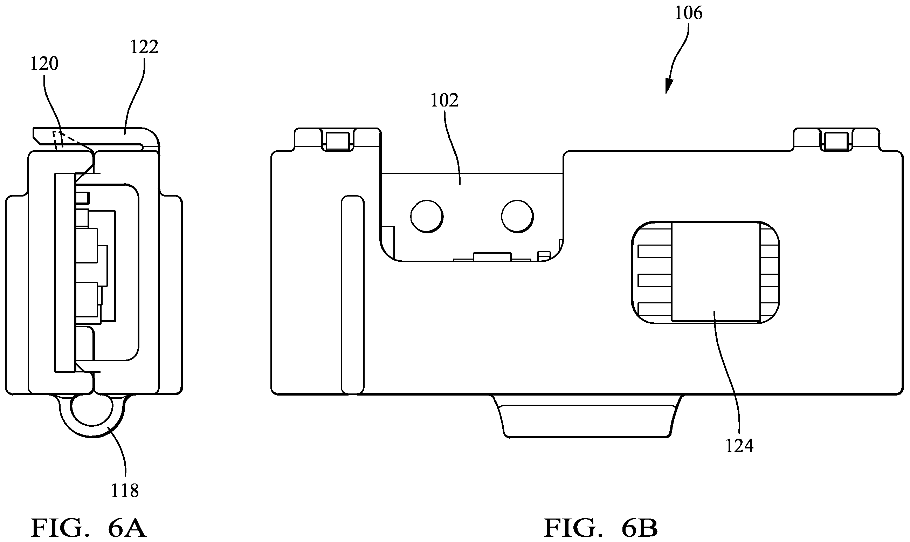

As shown in FIGs. 2, 6A, and 6B, the PCBA housing 106 includes a positive locking window/core-out 124 which engages with a mating lock feature 126 in the plug housing 128 that provides secure mounting of the PCBA housing 106 into the plug housing 128.

Further, as can be seen by comparing FIGs. 1 and 3, the size and shape of the PCBA 102 and PCBA housing 106 may be adapted to the particular shape and size required by the plug configuration.

The power cord 100 presented herein allows the EVSE to use a common interface for various power cord configurations since the microcontroller in the power cord identifies the plug type over the two wire digital interface and the EVSE can automatically configure itself for proper operation with that plug type. The microcontroller also provides the connector blade temperature data over the same two wire digital interface, thereby reducing the number of wires required in the power cord. The PCBA housing 106 provides protection to the PCBA 102 prior to installation in the power cord 100.

The illustrated embodiments conform to the NEMA 5-15 and 14-50 standards. However, other embodiments of the invention that conform to different technical standards, such as Europlug CCE 7/16, British Standard (BS) 1363, Australian/New Zealand Standard AS/NZS 3112, or Chinese PPCS-CCC technical standards, but especially to plugs having parallel connector blade terminals, e.g., NEMA 5-15P, 6-15P, 6-30P, and 6-50P may be envisioned that provide similar benefits.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a particular situation or material to the teachings of the invention without departing from its scope. Dimensions, types of materials, orientations of the various components, and the number and positions of the various components described herein are intended to define parameters of certain embodiments and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. Electric vehicle supply equipment, comprising:
a power cord (100) configured to be disconnected from and reconnected to the electric vehicle supply equipment;
a printed circuit board assembly (102) disposed within a plug (104) of the power cord (100) having an electronic controller configured to transmit data regarding a connector blade configuration of the plug (104); and
a printed circuit board assembly housing (104) enclosing the printed circuit board assembly (102), wherein the printed circuit board assembly housing (104) is disposed within a plug housing (128) of the plug (104).

2. The electric vehicle supply equipment in accordance with claim 1, wherein the printed circuit board assembly (102) further includes an electronic temperature sensor in communication with the electronic controller and located proximate to a connector blade (112) of the plug (104) and wherein the electronic controller is configured to output temperature data of the connector blade (112) based on a signal provided by the electronic temperature sensor.

3. The electric vehicle supply equipment in accordance with claim 2, wherein the electronic controller is configured to transmit temperature data of the connector blade (112) to the electric vehicle supply equipment via a two wire interface.

4. The electric vehicle supply equipment in accordance with claim 2 or 3, wherein the printed circuit board assembly housing (104) is configured to locate the electronic temperature sensor relative to the connector blade (112) within the plug housing (128) within a predetermined dimensional tolerance.

5. The electric vehicle supply equipment in accordance with any one of claims 2 to 4, wherein the printed circuit board assembly housing (104) defines locating features (108) that engage corresponding locating features (110) in the plug housing (128) to locate the electronic temperature sensor relative to the connector blade (112) within the plug housing (128) within a predetermined dimensional tolerance.

6. The electric vehicle supply equipment in accordance with any one of the preceding claims, wherein the printed circuit board assembly housing (104) includes a case portion (114) in which the printed circuit board assembly (102) is disposed, and a cover portion (116) configured to enclose the printed circuit board assembly (102) within the printed circuit board assembly housing (104).

7. The electric vehicle supply equipment in accordance with claim 6, wherein the case portion (114) is connected to the cover portion (116) by a living hinge (118).

8. The electric vehicle supply equipment in accordance with any one of the preceding claims, wherein the printed circuit board assembly housing (104) is configured to provide electrostatic discharge protection for the printed circuit board assembly (102).

9. The electric vehicle supply equipment in accordance with any one of the preceding claims, wherein the printed circuit board assembly housing (104) is configured to provide protection for the printed circuit board assembly (102) against physical damage prior to installation of the printed circuit board assembly (102) in the plug housing (128).

10. The electric vehicle supply equipment in accordance with any one of the preceding claims, wherein the electronic controller is configured to transmit the data regarding the connector blade configuration of the plug (104) of the power cord (100) to the electric vehicle supply equipment via a two wire interface.

11. The electric vehicle supply equipment in accordance with any one of the preceding claims, wherein the connector blade configuration of the plug (104) is selected from a list consisting of National Electrical Manufactures Association 5-15P, 6-15P, 6-30P, and 6-50P, Europlug CCE 7/16, British Standard (BS) 1363, Australian/New Zealand Standard AS/NZS (3112) 3112, and Chinese PPCS-CCC technical standards.

12. A method of assembling a power cord (100), comprising:
disposing a printed circuit board assembly (102) having an electronic controller configured to transmit data regarding a connector blade configuration of a plug (104) of the power cord (100) and an electronic temperature sensor in communication with the electronic controller within a printed circuit board assembly housing (104);
disposing the printed circuit board assembly housing (104) within a plug housing (128) of the plug (104); and
positioning the electronic temperature sensor relative to a connector blade (112) within the plug housing (128) within a predetermined dimensional tolerance by engaging locating features (108) in the printed circuit board assembly housing (104) with corresponding locating features (110) in the plug housing (128).

13. The method in accordance with claim 12, further comprising:
disposing the printed circuit board assembly (102) within a case portion (114) of the printed circuit board assembly housing (104); and
enclosing the printed circuit board assembly (102) within the printed circuit board assembly housing (104) using a cover portion (116) of the printed circuit board assembly housing (104) joined to the case portion (114) by a living hinge (118).

14. The method according to claim 12 or 13, wherein the connector blade configuration of the plug (104) is selected from a list consisting of National Electrical Manufactures Association 5-15P, 6-15P, 6-30P, and 6-50P, Europlug CCE 7/16, British Standard (BS) 1363, Australian/New Zealand Standard AS/NZS (3112) 3112, and Chinese PPCS-CCC technical standards.
